Europäisches Patentamt

European Patent Office

Office européen des brevets

(19)

(11) **EP 1 392 062 A2**

(12) **EUROPEAN PATENT APPLICATION**

(43) Date of publication:
**25.02.2004 Bulletin 2004/09**

(51) Int Cl.⁷: $H04N\ 7/26$, $H04N\ 7/36$

(21) Application number: **03254698.8**

(22) Date of filing: **28.07.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **31.07.2002 GB 0217770**

(71) Applicant: **Blip-X Limited**
**Bishops Stortford,**
**Hertfordshire CM23 3SW (GB)**

(72) Inventors:
• **Kelly, Simon**
**Bishops Stortford Hertfordshire CM23 3SW (GB)**
• **Dancer, Andrew**
**Banbury Oxfordshire OX17 1HJ (GB)**

(74) Representative: **Geary, Stuart Lloyd et al**
**Venner, Shipley & Co.,**
**20 Little Britain**
**London EC1A 7DH (GB)**

(54) **Video data compression**

(57)    Video signals are compressed by removing complementary sets of pixels from alternate frames. In one embodiment, the removed pixels are determined to be static or moving, from an analysis of the temporally and spatially neighbouring remaining pixels and reconstructed by processes selected in dependence on whether they are static or moving. In another embodiment, the selection or combination of temporally and/or spatially neighbouring pixels required to reconstruct removed pixels is embedded in the data code of remaining pixels.

Figure 2

Printed by Jouve, 75001 PARIS (FR)

**Description**

The present invention relates to video compression.

WO01/65858 discloses a method of compressing video signals in which complementary sets of pixels are removed from the odd-numbered and even-numbered frames of a video signal. A removed pixel is reconstructed using the values for that pixel in the preceding and succeeding frames and the neighbouring pixels above and below in the same frame.

Although WO01/65858 discloses using different regeneration techniques for "moving" and "static" pixels, the method disclosed can produce unwanted artefacts in the restored video under certain circumstances.

It is an aim of the present invention to provide an improved video compression and decompression systems with improved identification of static pixels.

According to the present invention there is provided a method of transmitting a video signal, the method comprising:

removing complementary sets of pixels from alternate frames of a video signal to produce a compressed video signal;
transmitting said compressed video signal;
receiving the transmitted compressed video signal; and
regenerating said removed pixels, by processes selected in dependence on whether a pixel to be regenerated is determined to be static or moving, to decompress said compressed video signal,

wherein the determination of a pixel being static comprises determining whether its change with time meets a predetermined threshold criterion or, if said criterion is not met, whether the pixels neighbouring said pixel are more similar to each other than to a temporally interpolated value for said pixel.

Preferably, said determinations of pixels being static is performed after said reception of the compressed video.

A method of decompressing a video signal, which has been compressed by the removal of complementary sets pixels from alternate frames, the method comprising regenerating removed pixels, missing from the signal to be decompressed, by processes selected in dependence on whether a pixel to be regenerated is determined to be static or moving, to decompress said compressed video signal, wherein the determination of a pixel being static comprises determining whether its change with time meets a predetermined threshold criterion or, if said criterion is not met, whether the pixels neighbouring said pixel are more similar to each other than to a temporally interpolated value for said pixel.

Preferably, said determination of whether the change of a pixel with time meets a predetermined threshold criterion comprises calculating the difference between the corresponding pixels of the preceding and succeeding frames and comparing this difference with a threshold criterion. More preferably, said determination of whether the pixels neighbouring said pixel are more similar to each other than to a temporally interpolated value for said pixel comprises comparing, on the one hand, the difference between a interpolation between said corresponding pixels and the difference between said corresponding pixels and, on the other hand, a spatial interpolation between neighbouring pixels in the current frame. One or both of said interpolations may be means.

Preferably, said neighbouring pixels are the pixels adjacent to the pixel to be regenerated which have not themselves required regeneration.

The process selected for static pixels may comprise selecting the corresponding pixel of the preceding or succeeding frame. Preferably, however, the process selected for static pixels comprises interpolating between the corresponding pixels of the preceding and succeeding frames.

Preferably, the process selected for moving pixels comprises interpolating spatially between neighbouring pixel which did not require regeneration. More preferably, the process selected for moving pixels comprises interpolating spatially between neighbouring pixel which did not require regeneration and temporally between corresponding pixels in preceding and succeeding frames.

The detection of static/moving pixels from the compressed signal can be replaced by analysing the uncompressed signal and encoding into the compressed signal information for indicating selection of the optimal regeneration process.

According to the present invention, there is provided another method of transmitting a video signal, the method comprising:

removing complementary sets of pixels from alternate frames of a video signal to produce a compressed video signal;
transmitting said compressed video signal;

receiving the transmitted compressed video signal; and

regenerating said removed pixels to decompress said compressed video signal,

wherein data representing retained pixels is modified to indicate a regeneration process for respective removed pixels and regeneration of removed pixels is performed using a process selected in dependence on the state of the data representing the associated retained pixel.

According to the present invention, there is provided a method of compressing a video signal, the method comprising removing complementary sets of pixels from alternate frames of a video signal to produce a compressed video signal, wherein data representing retained pixels is modified to indicate a regeneration process for respective removed pixels and regeneration of removed pixels is performed using a process selected in dependence on the state of the data representing the associated retained pixel.

According to the present invention, there is provided a method of decompressing a video signal, which has been compressed by the removal of complementary sets pixels from alternate frames and the modification of digital codes for remaining pixels to indicate whether removed pixels are static or moving, the method comprising regenerating removed pixels, missing from a video signal to be decompressed, to decompress said compressed video signal, wherein data representing retained pixels is modified to indicate a regeneration process for respective removed pixels and regeneration of removed pixels is performed using a process selected in dependence on the state of the data representing the associated retained pixel.

The data representing retained pixels may be modified to indicate whether removed pixels are static or moving. A bit of said data may be set in dependence on whether the associated removed pixel is static or moving, in which case the process selected for static pixels may comprise selecting the corresponding pixel of the preceding or succeeding frame or interpolating between the corresponding pixels of the preceding and succeeding frames. More preferably, however, the process selected for moving pixels comprises interpolating spatially between neighbouring pixel which did not require regeneration, in which case the process selected for moving pixels preferably comprises interpolating spatially between neighbouring pixel which did not require regeneration and temporally between corresponding pixels in preceding and succeeding frames.

Preferably, the data representing retained pixels is modified to indicate which of a plurality of processes is to be used for regenerating the associated removed pixels. More preferably, said data is modified in dependence on which of a plurality of pixels and/or temporal and/or spatial averages of pixels best matches the associated removed pixels. Still more preferably, the removed pixels are regenerated using the values from the pixels and/or averages indicated by the modification to said data. Conveniently, the least significant bits of each component (e.g. RGB or YUV) of the data representing a retained pixel form a code indicating said best match.

The compression methods of the present invention may be supplemented by subsequent further compression, for example wavelet or MPEG compression.

The present invention also provided apparatus, such as computers, configured for performing methods according to the present invention and to signals, and recordings thereof, representing codes for controlling a computer to perform a method according to the present invention.

Embodiments of the present invention will now be described, by way of example, with reference to the accompanying drawings, in which:

Figure 1 is a block diagram of a computer configured for performing a first compression method according to the present invention;

Figure 2 illustrates a first compression method according to the present invention;

Figure 3 is a block diagram of a computer configured for performing a first decompression method according to the present invention;

Figure 4 is a flowchart of a first thread of a decompression program according to the present invention;

Figure 5 is a flowchart of a second thread of a decompression program according to the present invention;

Figure 6 illustrates a second compression method according to the present invention;

Figure 7 is a flowchart illustrating part of the method of Figure 6 in more detail;

Figure 8 is a flowchart of a second thread of another decompression program according to the present invention;

Figure 9 is a flowchart illustrating part of a compression method in detail;

Figure 10 is a flowchart of a second thread of yet another decompression program according to the present invention;

Figure 11 is a block diagram of a hybrid compression system according to the present invention; and

Figure 12 is a block diagram of a hybrid decompression system according to the present invention.

In the following description, 10 by 10 pixel frames will be used to illustrate the present invention. This is purely for the purpose of making the present invention more readily comprehensible and the 10 by 10 pixel frames are to be understood to represent frames having more conventional and much large numbers of pixels.

A first embodiment of the compression aspect of the present invention will now be described.

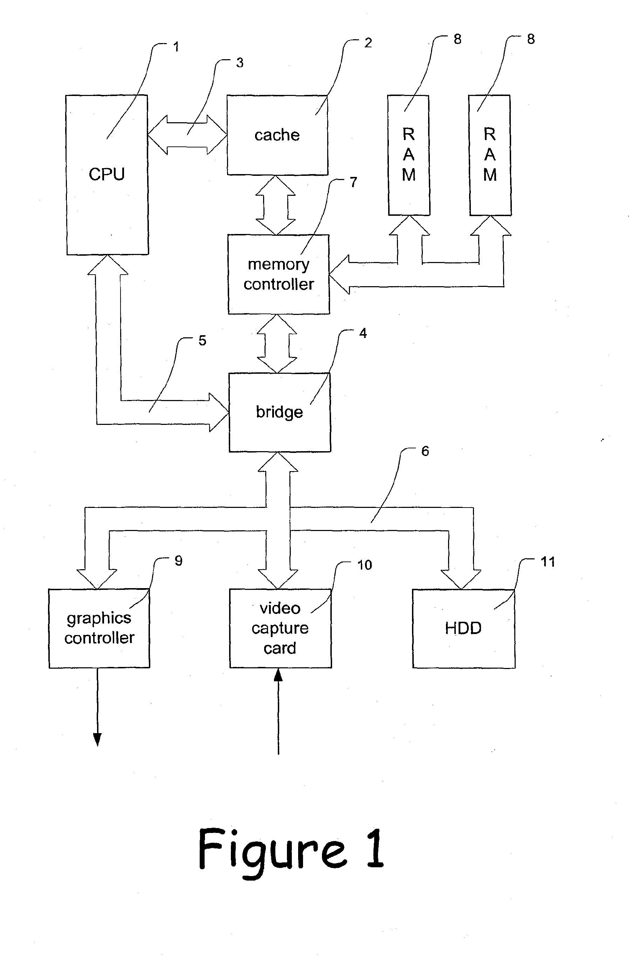

Referring to Figure 1, a computer comprises a CPU (central processing unit) 1, a level 2 cache connected to the CPU 1 by a backside bus 3, a bridge 4 interfacing a system bus 5 and a PCI bus 6 and a memory controller 7 connected to the bridge 4 and the cache 2 and to a plurality of RAM modules 8. A graphics controller 9, a video capture card 10 and a hard disk 11 are connected to the PCI bus 6. The hard disk 11 stores programs for controlling the computer, including a video compression program, which is loaded into RAM for execution. The hard disk 11 is also used to store compressed video.

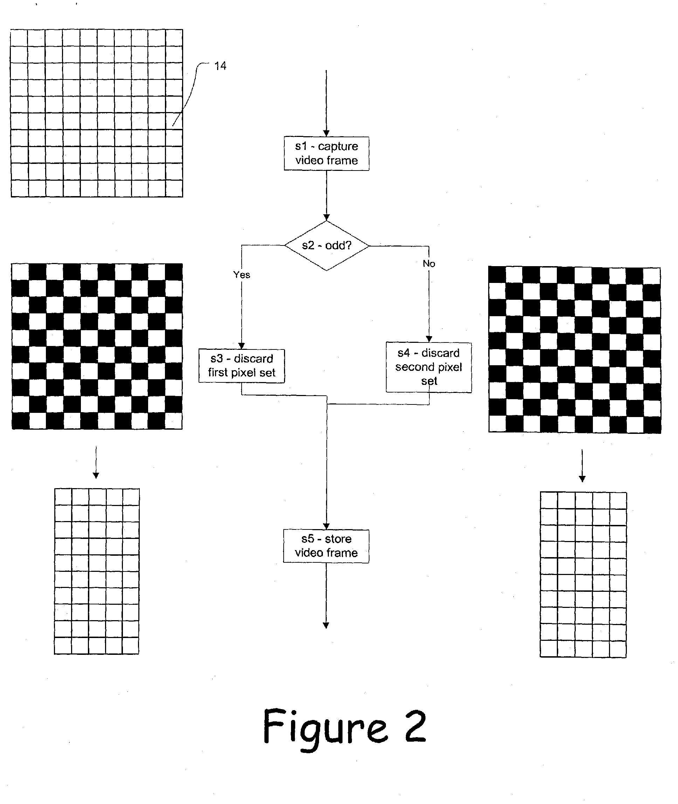

Referring to Figure 2, during video compression, video frames 14 are captured by the video capture card 10 (step s1). When a frame 14 has been captured, it is determined whether it is odd, i.e. first, third, fifth, ..., or even, i.e. second, fourth, sixth, ..., (step s2). If the frame 14 is odd, a first set of pixels is removed (step s3). However, if the frame 14 is even, a second set of pixels is removed (step s4). The first and second sets of pixels are the same size and complementary. That is, the second set comprises the pixels that are not in the first set. In the present example, the removed pixels are arranged in complementary checkerboard patterns.

When the appropriate pixel set has been removed, the remaining pixels are written to a file on the hard disk 11 (step s5).

The file of compressed video on the hard drive 11 can be transmitted across a computer network or used to modulate a carrier wave for transmission. Alternatively, the output of the compression process could be transmitted immediately across a network or on a carrier wave, rather than being stored on the hard disk 11.

A first embodiment of the decompression aspect of the present invention, which can decompress video signals produced by the first embodiment of the compression aspect, will now be described.

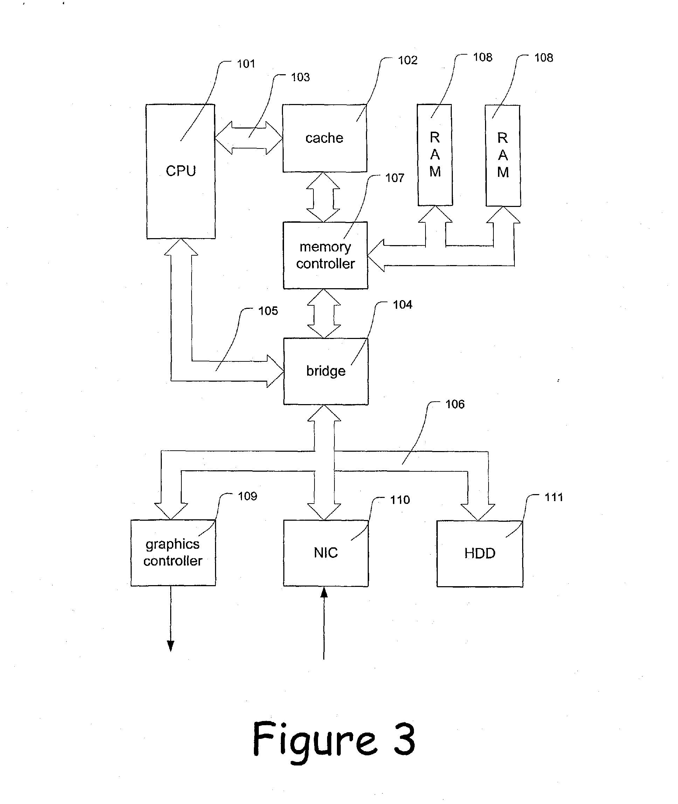

Referring to Figure 3, a computer comprises a CPU (central processing unit) 101, a level 102 cache connected to the CPU 101 by a backside bus 103, a bridge 104 interfacing a system bus 105 and a PCI bus 106 and a memory controller 107 connected to the bridge 104 and the cache 102 and to a plurality of RAM modules 108. A graphics controller 109, a network interface card 110 and a hard disk 111 are connected to the PCI bus 106. The hard disk 111 stores programs for controlling the computer, including a video decompression program, which is loaded into RAM for execution.

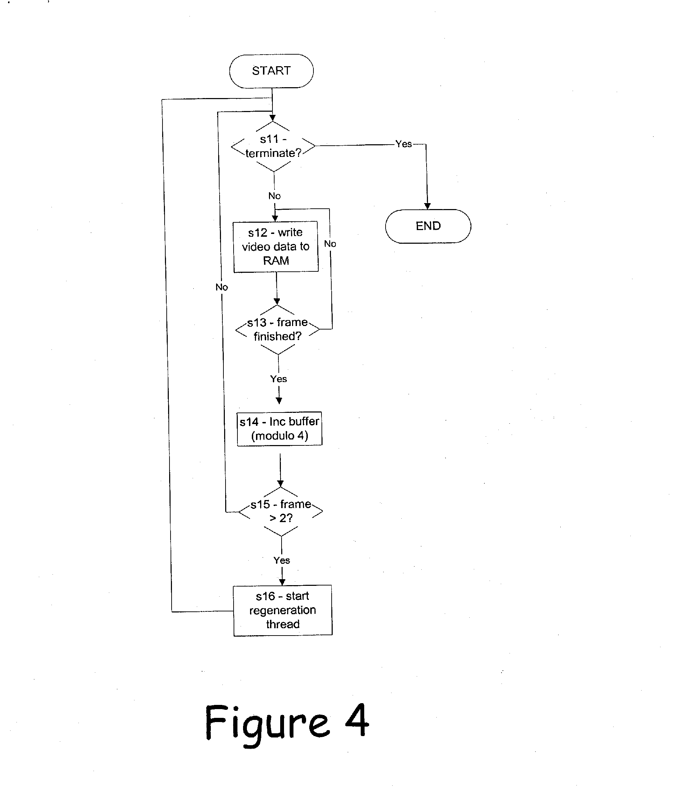

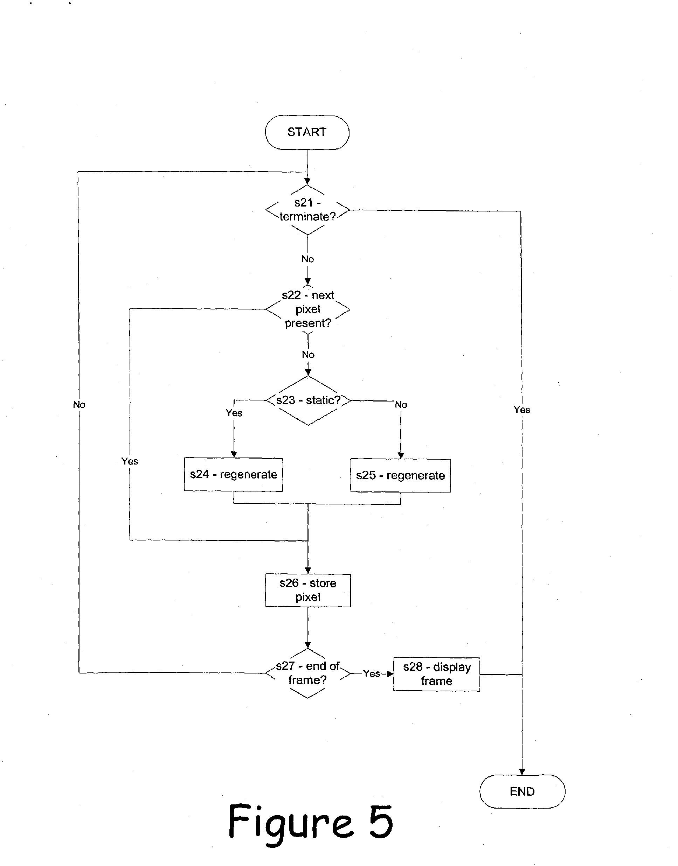

Decompression involves two processes, handled by separate threads. The first thread (Figure 4) deals with the reception of compressed video data and the second thread (Figure 5) deals with the regeneration of missing data.

Referring to the Figure 4, the first thread comprises a loop which reads data from the network interface card 110 and stores it in the RAM 108. More particularly, the first thread initially determines whether it should terminate, e. g. due to the end of the video data stream, an exception or a user instruction, (step s11). If the thread is not to terminate, it reads the next packet of video data from the network interface card 110 and writes it to a buffer in the RAM 108 (step s12). There are four buffers, numbered 0, 1, 2 and 3, each of which can hold one compressed video frame.

When the data has been written to the RAM 108, it is determined whether the buffering of a frame has been completed thereby (step s13). If the buffering of a frame has not been completed, the thread returns to step s11. However, if the buffering of a frame has been completed, the buffer index is incremented (step s14). Thus, if the current buffer is 0, the new buffer is 1 and, if the current buffer is 3, the new buffer is 0.

If the frame count is greater than three, i.e. at least three complete frames have been received (step s15), the data regeneration thread is triggered (step s16). If the three complete frames have not been received at step s15 and following step s16, the thread returns to step s11.

Referring to Figure 5, the first step (step s21) of the regeneration thread determines whether the thread should terminate, e.g. in response to a user input. If the thread is not to terminate, it is determined whether the next pixel is present in the current buffer (step s22) on the basis of the current frame being odd or even. If the pixel is present, it is stored in an output buffer (step s26). However, if the pixel is not present, it needs to be regenerated.

In order to regenerate a pixel, it is first determined whether that pixel is static, i.e. in an area of the image that remains unchanged over three frames, or, conversely, moving (step s23).

Each pixel is represented by three bytes with the red, green and blue components being represented by respective bytes. For each colour, the difference between the corresponding pixel in the preceding and succeeding frames is calculated and compared with a threshold $\Delta_T$

$$\begin{aligned}
\Delta_R &= \left| p_{R(t-1)}(x,y) - p_{R(t+1)}(x,y) \right| \\
\Delta_G &= \left| p_{G(t-1)}(x,y) - p_{G(t+1)}(x,y) \right| \\
\Delta_B &= \left| p_{B(t-1)}(x,y) - p_{B(t+1)}(x,y) \right|
\end{aligned} \qquad (1)$$

where R, G and B indicate red, green and blue respectively and *x* and *y* are the coordinates of the pixel to be regenerated. If any of the difference values $\Delta_R$, $\Delta_G$, $\Delta_B$ is not less than the threshold $\Delta_T$, the pixel is determines not to be static, otherwise it is determined to be potentially static. If the current pixel is determined to be potentially static, the red, green and blue values for the current pixel ($p'_{R(t)}(x,y)$, $p'_{G(t)}(x,y)$, $p'_{B(t)}(x,y)$) are set respectively to the means of the red, green and blue values of the corresponding pixels of the preceding and succeeding frames.

Applying this algorithm alone can lead to artefacts in the displayed image due to coincidentally "static" pixels in an otherwise moving area of an image. In order to avoid such false positives, the following are calculated:

$$k_{Rv} = \left| \frac{p_{R(t)}(x,y-1) + p_{R(t)}(x,y+1)}{2} - p'_{R(t)}(x,y) \right| - \left| p_{R(t)}(x,y-1) - p_{R(t)}(x,y+1) \right|$$

$$k_{Gv} = \left| \frac{p_{G(t)}(x,y-1) + p_{G(t)}(x,y+1)}{2} - p'_{G(t)}(x,y) \right| - \left| p_{G(t)}(x,y-1) - p_{G(t)}(x,y+1) \right|$$

$$k_{Bv} = \left| \frac{p_{B(t)}(x,y-1) + p_{B(t)}(x,y+1)}{2} - p'_{B(t)}(x,y) \right| - \left| p_{B(t)}(x,y-1) - p_{B(t)}(x,y+1) \right|$$

$$\text{(2)}$$

$$k_{Rh} = \left| \frac{p_{R(t)}(x,y-1) + p_{R(t)}(x,y+1)}{2} - p'_{R(t)}(x,y) \right| - \left| p_{R(t)}(x,y-1) - p_{R(t)}(x,y+1) \right|$$

$$k_{Gh} = \left| \frac{p_{G(t)}(x-1,y) + p_{G(t)}(x+1,y)}{2} - p'_{G(t)}(x,y) \right| - \left| p_{G(t)}(x-1,y) - p_{G(t)}(x+1,y) \right|$$

$$k_{Bh} = \left| \frac{p_{B(t)}(x-1,y) + p_{B(t)}(x+1,y)}{2} - p'_{B(t)}(x,y) \right| - \left| p_{B(t)}(x-1,y) - p_{B(t)}(x+1,y) \right|$$

If any of the values $k_{Rv}$, $k_{Gv}$, $k_{Bv}$, $k_{Rh}$, $k_{Gh}$, $k_{Bh}$ is greater than a threshold, the current pixel is determined not to be static after all and to be moving. Thresholds in the range 5 to 10 have been found to be usable with 24-bit colour images.

If it is finally determined that the current pixel is static, the previously calculated mean values ($p'_{R(t)}(x,y)$, $p'_{G(t)}(x,y)$, $p'_{B(t)}(x,y)$) are stored as the regenerated red, green and blue values for the current pixel (steps s24 and s26).

On the other hand, if the current pixel is determined to be moving, it is regenerated by taking the average of the surrounding four pixels in the current frame (step s25):

$$p'_{R(t)}(x,y) = \frac{p_{R(t)}(x-1,y) + p_{R(t)}(x+1,y) + p_{R(t)}(x,y-1) + p_{R(t)}(x,y+1)}{4}$$

$$p'_{G(t)}(x,y) = \frac{p_{G(t)}(x-1,y) + p_{G(t)}(x+1,y) + p_{G(t)}(x,y-1) + p_{G(t)}(x,y+1)}{4} \quad \text{(3)}$$

$$p'_{B(t)}(x,y) = \frac{p_{B(t)}(x-1,y) + p_{B(t)}(x+1,y) + p_{B(t)}(x,y-1) + p_{B(t)}(x,y+1)}{4}$$

These average values are then stored in the output buffer (step s26).

This process is repeated until the current frame has been completely regenerated, after which the regenerated frame is displayed (step s27).

Certain values, used in Equations (2) and (3) will not be available for pixels at the edge of a frame. To solve this, the missing pixels can be replaced with a value that is available. For instance, if there is no $p_{R(t)}(x-1,y)$ value, $p_{R(t)}(x+1,y)$ could be used instead. Alternatively, the averaging in Equations (2) and (3) could be adapted to employ only those pixel for which data exists, e.g.:

if $p_{R(t)}(x,y-1)$ does not exist,

$$k_{Rv} = \left| \frac{p_{R(t)}(x,y-1) + p_{R(t)}(x,y+1)}{2} - p'_{R(t)}(x,y) \right| - \left| p_{R(t)}(x,y-1) - p_{R(t)}(x,y+1) \right|$$

becomes

$$k_{Rv} = |p_{R(t)}(x,y+1) - p'_{R(t)}(x,y)| - |0|$$

and

$$p'_{R(t)}(x,y) = \frac{p_{R(t)} + p_{R(t)}(x-1,y) + p_{R(t)}(x-1,y) + p_{R(t)}(x,y+1)}{4}$$

becomes

$$p'_{R(t)}(x,y) = \frac{p_{R(t)}(x-1,y) + p_{R(t)}(x+1,y) + p_{R(t)}(x,y+1)}{3}$$

A further option is to discard the outer ring of pixels in the decompression process.

A second embodiment of the decompression aspect of the present invention, which can decompress video signals produced by the first embodiment of the compression aspect, will now be described.

The decompression again involves two processes, handled by separate threads. The first thread is as described above with reference to (Figure 4) and deals with the reception of compressed video data. The second thread (Figure 5) deals with the regeneration of missing data.

Referring again to Figure 5, the first step (step s21) of the regeneration thread determines whether the thread should terminate, e.g. in response to a user input. If the thread is not to terminate, it is determined whether the next pixel is present in the current buffer (step s22) on the basis of the current frame being odd or even. If the pixel is present, it is stored in an output buffer (step s26). However, if the pixel is not present, it needs to be regenerated.

In order to regenerate a pixel, it is first determined whether that pixel is static, i.e. in an area of the image that remains unchanged over three frames (step s23).

Each pixel is represented by three bytes with the red, green and blue components being represented by respective bytes. For each colour, the difference between the corresponding pixel in the preceding and succeeding frames is calculated and compared with a threshold $\Delta_T$:

$$\begin{aligned} \left| \Delta_R \right| &= \left| p_{R(t-1)}(x,y) - p_{R(t+1)}(x,y) \right| \\ \left| \Delta_G \right| &= \left| p_{G(t-1)}(x,y) - p_{G(t+1)}(x,y) \right| \\ \left| \Delta_B \right| &= \left| p_{B(t-1)}(x,y) - p_{B(t+1)}(x,y) \right| \end{aligned} \qquad (4)$$

where R, G and B indicate red, green and blue respectively and $x$ and $y$ are the coordinates of the pixel to be regenerated. If any of the difference values $\Delta_R$, $\Delta_G$, $\Delta_B$ is not less than the threshold $\Delta_T$, the pixel is determined not to be static, otherwise it is determined to be potentially static. If the current pixel is determined to be potentially static, the red, green and blue values for the current pixel ($p'_{R(t)}(x,y)$, $p'_{G(t)}(x,y)$, $p'_{B(t)}(x,y)$) are set respectively to those of the corresponding pixel of the preceding frame.

Applying this algorithm alone can lead to artefacts in the displayed image due to coincidentally "static" pixels in an otherwise moving area of an image. In order to avoid such false positives, the following are calculated:

$$k_R = \left| p_{R(t-1)}(x,y) - p_{R(t+1)}(x,y) \right| - \left| p_{R(t)}(x,y-1) - p_{R(t)}(x,y+1) \right|$$

$$k_G = \left| p_{G(t-1)}(x,y) - p_{G(t+1)}(x,y) \right| - \left| p_{G(t)}(x,y-1) - p_{G(t)}(x,y+1) \right| \quad (5)$$

$$k_B = \left| p_{B(t-1)}(x,y) - p_{B(t+1)}(x,y) \right| - \left| p_{B(t)}(x,y-1) - p_{B(t)}(x,y+1) \right|$$

If any of the values $k_R$, $k_G$, $k_B$ is greater than a threshold, the current pixel is determined not to be static after all and to be moving. Thresholds in the range 5 to 10 have been found to be usable with 24-bit colour images.

If it is finally determined that the current pixel is static, the values from the preceding frame are stored as the regenerated red, green and blue values for the current pixel (steps s24 and s26).

On the other hand, if the current pixel is determined to be moving, it is regenerated by taking the average of the pixels above and below in the current frame (step s25):

$$p'_{R(t)}(x,y) = \frac{p_{R(t)}(x,y-1) + p_{R(t)}(x,y+1)}{2}$$

$$p'_{G(t)}(x,y) = \frac{p_{G(t)}(x,y-1) + p_{G(t)}(x,y+1)}{2} \quad (6)$$

$$p'_{B(t)}(x,y) = \frac{p_{B(t)}(x,y-1) + p_{B(t)}(x,y+1)}{2}$$

These average values are then stored in the output buffer (step s26).

This process is repeated until the current frame has been completely regenerated, after which it is displayed (step s27).

Certain values, used in Equations (5) and (6) will not be available for pixels at the edge of a frame. To solve this, the missing pixels can be replaced with a value that is available. For instance, if there is *no $p_{R(t)}(x-1,y)$ value, $p_{R(t)}(x+1,y)$* could be used instead. A further option is to discard the outer ring of pixels in the decompression process.

This second embodiment is simpler than the first embodiment and particularly suited to the case where alternate lines are removed in the compression process. However, it can be used with other patterns of removed pixels and it can be seen that the complexity of the decompression process can be set solely with reference to the capabilities of the decompressing apparatus. In other words, the same compressed signal can be reconstructed with different qualities by different decompression apparatuses.

A second embodiment of the compression aspect of the present invention will now be described.

The present embodiment uses the same hardware as the first embodiment, described with reference to Figure 1.

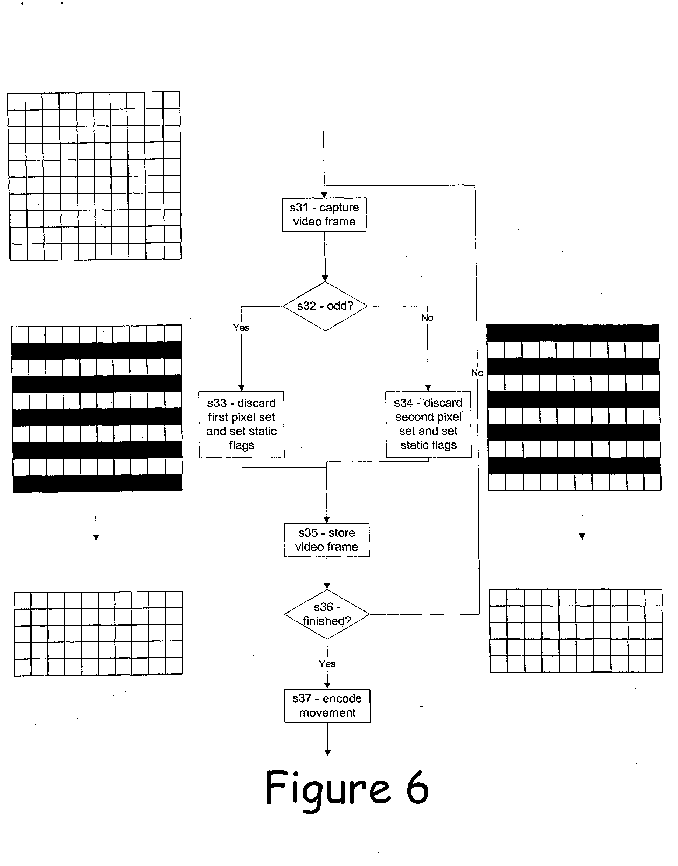

Referring to Figure 6, video frames 314 are captured by the video capture card 10 (step s31). When a frame 314 has been captured, it is determined whether it is odd, i.e. first, third, fifth, ..., or even, i.e. second, fourth, sixth, ..., (step s32). If the frame 314 is odd, a first set of pixels is discarded (step s33) otherwise a second, complementary set of pixels is discarded (step s34). The sets of pixels comprise sets of alternate lines.

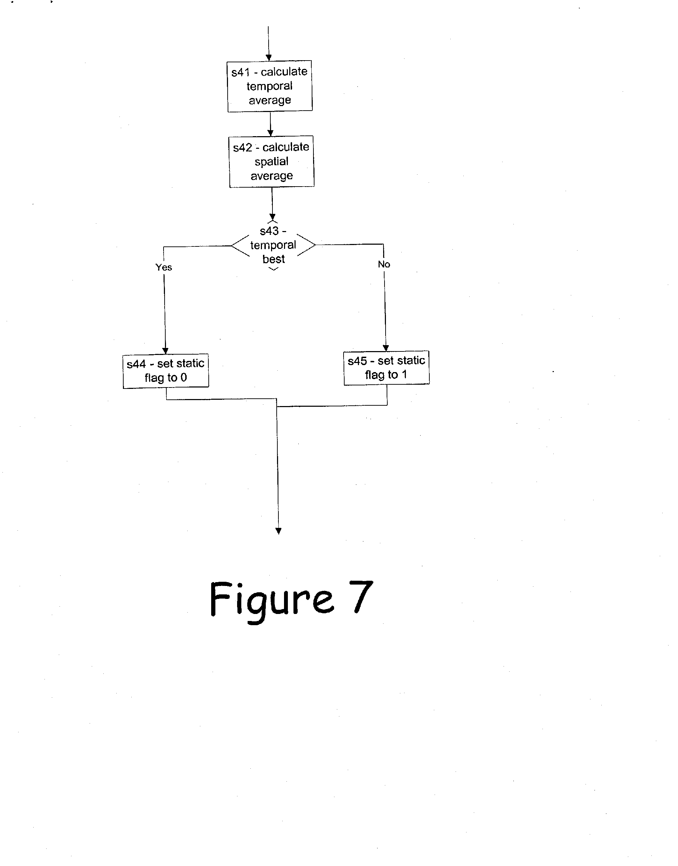

Referring to Figure 7, for each of the pixels to be removed, the average for each colour of the corresponding pixels in the preceding and succeeding frames is calculated (step s41) and the average for each colour of the pixels in the rows above and below (step s42) is calculated. These averages are compared with the values for the current pixel to determine the best match (step s43). If the temporal average calculated at step s41 is best, the pixel is deemed to be moving and the least significant blue bit (static flag) of the pixel in the row above is set to 0 (step s44). If the temporal average is not best, the pixel is deemed to be static and the least significant blue bit (static flag) of the pixel in the row above is set to 1 (step s45). Returning to Figure 6, if the frame 314 is even, the static flags are the least significant blue bits of the pixels in the same column of the following line.

When all of the static flag bits, i.e. the least significant blue bits, have been set, the remaining pixels, i.e. the odd lines of even frames and the even lines of odd frames, are written to the a file on the hard disk 11 (step s35).

A third embodiment of the decompression aspect of the present invention, which can decompress video signals produced by the second embodiment of the compression aspect, will now be described. The present embodiment uses the same hardware and reception thread as the first and second embodiments, described with reference to Figures 3 and 4.

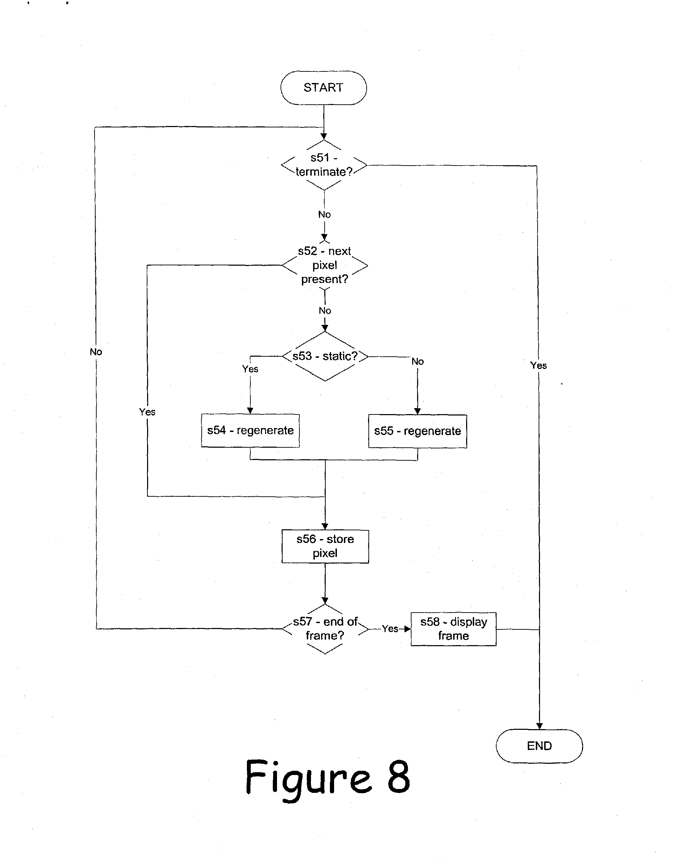

Referring to Figure 8, the first step (step s51) of the regeneration thread determines whether the thread should terminate, e.g. in response to a user input. If the thread is not to terminate, it is determined whether the next pixel is present in the current buffer (step s52) on the basis the current frame being odd or even. If the pixel is present, it is stored in an output buffer (step s56). However, if the pixel is not present, it needs to be regenerated.

In order to regenerate a pixel, it is first determined whether that pixel is static, i.e. in an area of the image that remains unchanged over three frames, (step s53) by checking the least significant blue bit for the pixel in the same column and preceding row for odd frames and the same column and succeeding row for even frames.

If the relevant static flag pixel indicates that the current pixel is static, the mean values of the red, green and blue values of the corresponding pixels in the preceding and succeeding frames are calculated and stored as the regenerated red, green and blue values for the current pixel (steps s54 and s56).

On the other hand, if the current pixel is determined to be moving, it is regenerated by taking the average of the pixels above and below in the current frame (step s55):

$$p'_{R(t)}(x,y) = \frac{p_{R(t)}(x,y-1) + p_{R(t)}(x,y+1)}{2}$$

$$p'_{G(t)}(x,y) = \frac{p_{G(t)}(x,y-1) + p_{G(t)}(x,y+1)}{2} \quad (8)$$

$$p'_{B(t)}(x,y) = \frac{p_{B(t)}(x,y-1) + p_{B(t)}(x,y+1)}{2}$$

These average values are then stored in the output buffer (step s56).

This process is repeated until the current frame has been completely regenerated when the regenerated frame is displayed (step s57).

As explained above, steps need to be take to deal with pixels at the edges of frames.

A third embodiment of the compression aspect of the present invention will now be described.

The present embodiment uses the same hardware as the first embodiment, described with reference to Figure 1.

Referring to Figure 2, during video compression, video frames 14 are captured by the video capture card 10 (step s1). When a frame 14 has been captured, it is determined whether it is odd, i.e. first, third, fifth, ..., or even, i.e. second, fourth, sixth, ..., (step s2). If the frame 14 is odd, a first set of pixels is removed (step s3). However, if the frame 14 is even, a second set of pixels is removed (step s4): The first and second sets of pixels are the same size and complementary. That is, the second set comprises the pixels that are not in the first set. In the present example, the removed pixels are arranged in complementary checkerboard patterns.

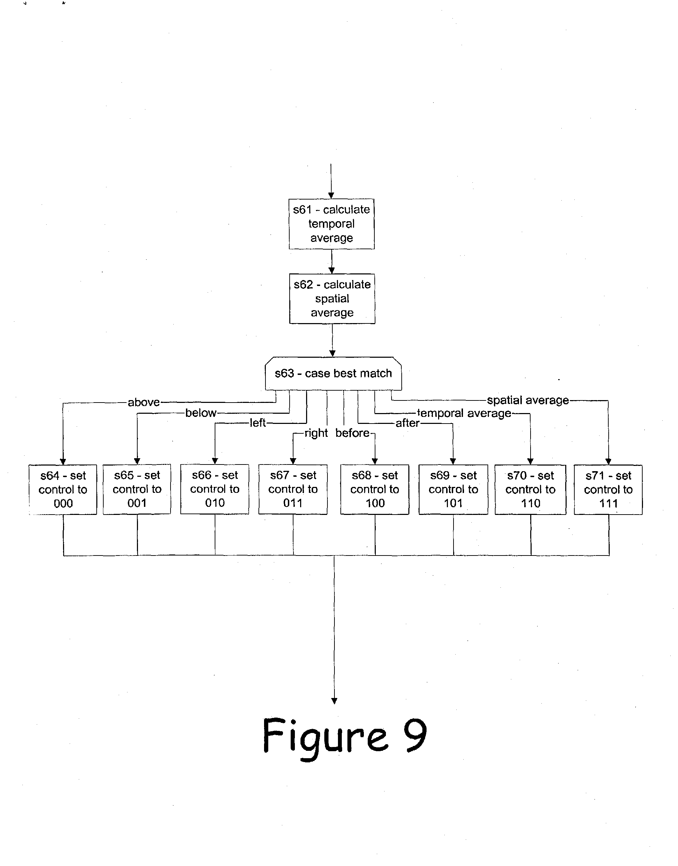

Referring to Figure 9, for each of the pixels to be removed, the average for each colour of the corresponding pixels in the preceding and succeeding frames is calculated (step s61) and the average for each colour of the pixels in the rows above and below (step s62) is calculated. The colour values for current pixel are compared with those for each of the pixel above, the pixel below, the corresponding pixel in the preceding frame, the corresponding pixel in the succeeding frame, the temporal average and the spatial average (step s63) to find the one which is closest to the current pixel. The result of these comparisons is indicated using a 3-bit code comprising the least significant bit of each of the red, green and blue values of the preceding pixel for odd frames and the succeeding pixel for even frames.

If the pixel above is the best match, the code is set to 000 (step s64). If the pixel below is the best match, the code is set to 001 (step s65). If the pixel to the left is the best match, the code is set to 010 (step s66). If the pixel to the right is the best match, the code is set to 011 (step s67). If the preceding corresponding pixel is the best match, the code is set to 100 (step s68). If the succeeding corresponding pixel is the best match, the code is set to 101 (step s69). If the temporal average provides the best match, the code is set to 110 (step s70) and if the spatial average provides the beat match, the code is set to 111 (step s71).

Returning to Figure 2, when all of the control bits, i.e. the least significant red, green and blue bits, have been set, the remaining pixels are written to the a file on the hard disk 11 (step s5).

A fourth embodiment of the decompression aspect of the present invention, which can decompress video signals produced by the third embodiment of the compression aspect, will now be described. The present embodiment uses the same hardware and reception thread as the first and second embodiments, described with reference to Figures 3 and 4.

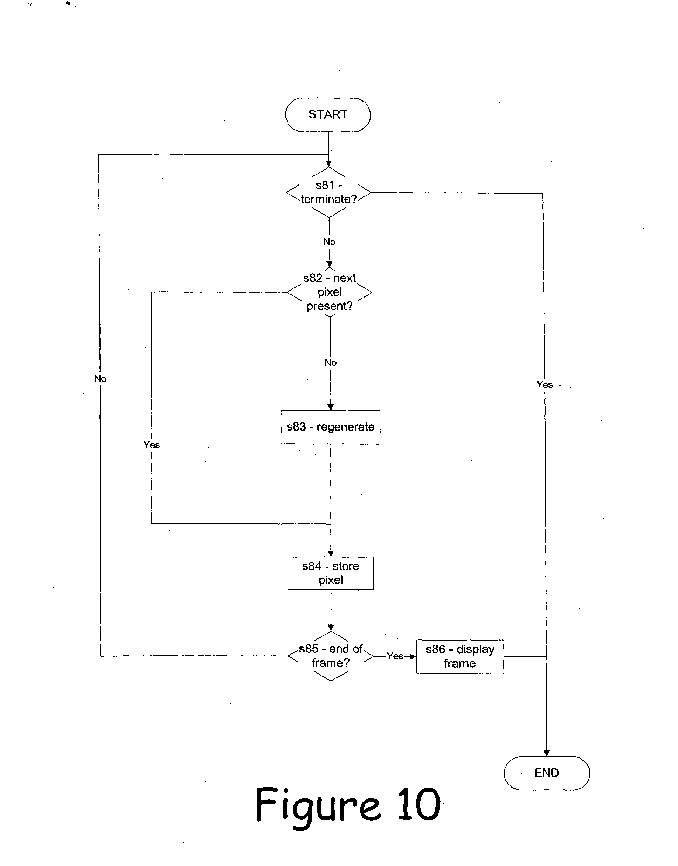

Referring to Figure 10, the first step (step s81) of the regeneration thread determines whether the thread should terminate, e.g. in response to a user input. If the thread is not to terminate, it is determined whether the next pixel is present in the current buffer (step s82) on the basis the current frame being odd or even. If the pixel is present, it is stored in an output buffer (step s84). However, if the pixel is not present, it needs to be regenerated.

In order to regenerate a pixel, it is first determined how that pixel is to be regenerated by reading the code formed by the least significant red, green and blue bits of the preceding or succeeding pixel, depending on whether the current frame is odd of even, and the performing the appropriate regeneration process, i.e. using the pixel above, the pixel below, the pixel to the left, the pixel to the right, the corresponding pixel in the preceding frame, the corresponding pixel in the succeeding frame, the average of the pixels above and below or the average of the corresponding pixels in the preceding and succeeding frames (step s83).

This process is repeated until the current frame has been completely regenerated (step s85), when the regenerated frame is displayed (step s86).

As explained above, steps need to be take to deal with pixels at the edges of frames.

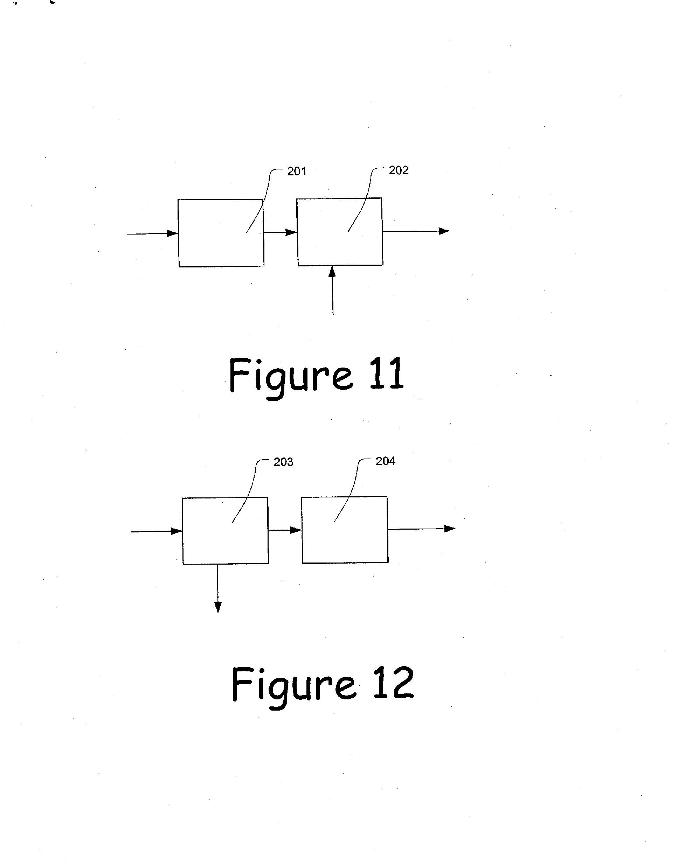

Referring to Figure 11, a hybrid video compression system comprises a first compression stage 201, which is any of the compressions systems described above, and a second compression stage 202 comprising an MPEG coder. The first compression stage 201 receives a video signal and compresses it by removing pixels by the first compression method described above. The output of the first compression stage 202 is input into the second compression stage 202 where it is further compressed and incorporated into an MPEG-2 transport stream with an accompanying audio signal.

Referring to Figure 12, a hybrid video decompression system, for decompressing signals produced by the compression system illustrated in Figure 9, comprises a first decompression stage 203, comprising an MPEG decoder, and a second decompression stage 204, which is any decompression system as described above. An MPEG-2 transport stream is received by the first decompression stage 203 which extracts and decodes an audio component, if any, and decodes a video component which is output to the second decompression stage 204. The second decompression stage 204 processes the decoded video components to regenerate the missing pixels and outputs the reconstructed video signal.

## Claims

1.  A method of decompressing a video signal, which has been compressed by the removal of complementary sets pixels from alternate frames, the method comprising regenerating removed pixels, missing from the signal to be decompressed, by processes selected in dependence on whether a pixel to be regenerated is determined to be static or moving, to decompress said compressed video signal,
    wherein the determination of a pixel being static comprises determining whether its change with time meets a predetermined threshold criterion or, if said criterion is not met, whether the pixels neighbouring said pixel are more similar to each other than to a temporally interpolated value for said pixel.

2.  A method of transmitting a video signal, the method comprising:

    removing complementary sets of pixels from alternate frames of a video signal to produce a compressed video signal;
    transmitting said compressed video signal;
    receiving the transmitted compressed video signal; and
    regenerating said removed pixels, by processes selected in dependence on whether a pixel to be regenerated is determined to be static or moving, to decompress said compressed video signal,

    wherein the determination of a pixel being static comprises determining whether its change with time meets a predetermined threshold criterion or, if said criterion is not met, whether the pixels neighbouring said pixel are more similar to each other than to a temporally interpolated value for said pixel.

3.  A method according to claim 1 or 2, wherein said determination of whether the change of a pixel with time meets a predetermined threshold criterion comprises calculating the difference between the corresponding pixels of the preceding and succeeding frames and comparing this difference with a threshold criterion, preferably wherein said determination of whether the pixels neighbouring said pixel are more similar to each other than to a temporally interpolated value for said pixel comprises comparing, on the one hand, the difference between a interpolation between said corresponding pixels and the difference between said corresponding pixels and, on the other hand, a spatial interpolation between neighbouring pixels in the current frame and, more preferably, wherein one or both of said interpolations are means.

4.  A method according to any preceding claim, wherein said neighbouring pixels are the pixels adjacent to the pixel to be regenerated which have not themselves required regeneration, preferably wherein the process selected for static pixels comprises interpolating between the corresponding pixels of the preceding and succeeding frames, and/or the process selected for static pixels comprises selecting the corresponding pixel of the preceding or succeeding frame, and/or the process selected for moving pixels comprises interpolating spatially between neighbouring pixel which did not require regeneration.

5. A method according to claim 4, wherein the process selected for moving pixels comprises interpolating spatially between neighbouring pixel which did not require regeneration and temporally between corresponding pixels in preceding and succeeding frames.

6. A method according to any preceding claim, wherein said determinations of pixels being static is performed after said reception of the compressed video.

7. A method of transmitting a video signal, the method comprising:

removing complementary sets of pixels from alternate frames of a video signal to produce a compressed video signal;
transmitting said compressed video signal;
receiving the transmitted compressed video signal; and
regenerating said removed pixels to decompress said compressed video signal,

wherein data representing retained pixels is modified to indicate a regeneration process for respective removed pixels and regeneration of removed pixels is performed using a process selected in dependence on the state of the data representing the associated retained pixel.

8. A method of decompressing a video signal, which has been compressed by the removal of complementary sets pixels from alternate frames and the modification of digital codes for remaining pixels to indicate whether removed pixels are static or moving, the method comprising regenerating removed pixels, missing from a video signal to be decompressed, to decompress said compressed video signal, wherein data representing retained pixels is modified to indicate a regeneration process for respective removed pixels and regeneration of removed pixels is performed using a process selected in dependence on the state of the data representing the associated retained pixel.

9. A method of compressing a video signal, the method comprising removing complementary sets of pixels from alternate frames of a video signal to produce a compressed video signal, wherein data representing retained pixels is modified to indicate a regeneration process for respective removed pixels and regeneration of removed pixels is performed using a process selected in dependence on the state of the data representing the associated retained pixel.

10. A method of decompressing a video signal comprising:-

performing a first decompression process on a twice compressed video signal to produce a once compressed video signal; and
performing a method according to any one of claims 1 to 14 to produce an uncompressed video signal.

11. Apparatus, preferably comprising a programmed computer, configured to perform a method according to any one of claims 1 to 10.

12. A signal representing program codes for controlling a computer to perform a method according to any one of claims 1 to 10.

13. A signal according to claim 12, comprising an electrical, optical or electromagnetic signal.

14. A data carrier carrying a recording of a signal according to claim 13.

# Figure 1

14

s1 - capture
video frame

s2 - odd?

Yes

No

s3 - discard
first pixel set

s4 - discard
second pixel
set

s5 - store
video frame

# Figure 2

Figure 3

Figure 4

START

s21 - terminate?

No

s22 - next pixel present?

No

s23 - static?

Yes

No

s24 - regenerate

s25 - regenerate

No

Yes

s26 - store pixel

s27 - end of frame?

Yes

s28 - display frame

Yes

END

# Figure 5

s31 - capture video frame

s32 - odd?

Yes    No

s33 - discard first pixel set and set static flags

s34 - discard second pixel set and set static flags

No

s35 - store video frame

s36 - finished?

Yes

s37 - encode movement

# Figure 6

s41 - calculate
temporal
average

s42 - calculate
spatial
average

s43 -
temporal
best

Yes

No

s44 - set static
flag to 0

s45 - set static
flag to 1

# Figure 7

Figure 8

Figure 9

Figure 10

201     202

# Figure 11

203     204

# Figure 12